(19) Europäisches Patentamt
European Patent Office
Office européen des brevets

(11) **EP 2 189 280 B1**

(12) **EUROPEAN PATENT SPECIFICATION**

(45) Date of publication and mention
of the grant of the patent:
**31.07.2013 Bulletin 2013/31**

(51) Int Cl.:
***B32B 27/36*** *(2006.01)*        ***B29C 61/06*** *(2006.01)*
***B65D 65/40*** *(2006.01)*        ***G09F 3/04*** *(2006.01)*
***B29K 67/00*** *(2006.01)*        ***B29K 105/02*** *(2006.01)*
***B29L 7/00*** *(2006.01)*        ***B29L 9/00*** *(2006.01)*
***G09F 3/02*** *(2006.01)*

(21) Application number: **08829038.2**

(22) Date of filing: **03.09.2008**

(86) International application number:
**PCT/JP2008/065867**

(87) International publication number:
**WO 2009/031579 (12.03.2009 Gazette 2009/11)**

(54) **THERMALLY SHRINKABLE POLYESTER FILM**

WÄRMESCHRUMPFENDE POLYESTERFOLIE

FILM DE POLYESTER THEMORÉTRACTABLE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **07.09.2007   JP 2007232678
11.01.2008   JP 2008004402
17.04.2008   JP 2008107846**

(43) Date of publication of application:
**26.05.2010 Bulletin 2010/21**

(73) Proprietor: **Teijin Dupont Films Japan Limited
Chiyoda-ku
Tokyo 100-0013 (JP)**

(72) Inventors:
• **MUNEKATA, Nobue**
**Anpachi-gun**
**Gifu 503-0123 (JP)**
• **KIMURA, Manabu**
**Anpachi-gun**
**Gifu 503-0123 (JP)**

(74) Representative: **Cockerton, Bruce Roger
Carpmaels & Ransford LLP
One Southampton Row
London WC1B 5HA (GB)**

(56) References cited:
**EP-A1- 1 481 798       EP-A1- 1 686 400
WO-A1-01/47711        JP-A- 09 174 684
JP-A- 2000 506 082     JP-A- 2007 152 943
JP-A- 2007 197 651     JP-A- 2007 197 711**

## Description

Technical Field

The present invention relates to a heat-shrinkable polyester film that has a particular wavelength light reflectivity and a high designability, and particularly to a heat-shrinkable polyester film that has a high transparency and a particular wavelength light reflectivity, thereby having a transparent luster and a high designability, and further has a heat shrinkability allowing its attachment on an outer surface of a container such as a PET bottle or an electric wire, thereby useful for a shrink label, an electric wire coating, etc.

Background Art

Various polyester films have recently been used for packaging a drink container, e.g. as a laminate film of a metal can, a shrink film attachable on an outer surface of a PET bottle, etc. In the field of packing bags and the like, for example, a method, which contains printing a pattern on a film by a gravure method etc. excellent in print quality, bonding the film by heat fusion, and using the resultant as a packing bag, has been proposed to achieve a higher designability. In recent years, also shrink labels have been required to have a more beautiful appearance in addition to improved heat shrinkage, handling, chemical resistance, etc.

Various polyester films have been studied in view of use in shrink labels. For example, JP-A-9-174684 (Patent Document 1) discloses a heat-shrinkable polyester film that contains a naphthalenedicarboxylic acid residue to reduce shrinkage nonuniformity generated in a hot air shrink tunnel. Furthermore, JP-A-2007-152943 (Patent Document 2) proposes a multilayer heat-shrinkable polyester film excellent in perforation cutting property on a label, strength of adhesion part, impact resistance, and designability on a bottle, and discloses a method using layers containing polyesters with different blend ratios. In Patent Document 2, a technology for preventing the design on the film from deteriorating due to the vertical shrinkage on a rectangular bottle is examined, and thus the designability is studied with respect not to appearance beauty related to the transparency, metallic luster, etc. but to the surface appearance changed by the heat shrinkage.

Meanwhile multilayer polyester films have been studied as lustrous films in view of the light interference. For example, JP-T-9-506837 (Patent Document 3, the term "JP-T" as used herein means a published Japanese translation of a PCT patent application) discloses a multilayer laminate film produced by alternately stacking polyethylene naphthalate layers and other layers such as polyethylene naphthalate copolymer layers to utilize the structurally-controlled light interference of the layers for selectively reflecting a particular wavelength light. However, the film of Patent Document 3 is produced in view not of the designability but of improving the polarization and reflection properties suitable for use in reflective polarizers and mirrors. Therefore, in Patent Document 3, a film having a high transparency and luster is not studied, and the heat shrinkage property as a shrink label is not examined at all.

Furthermore, JP-A-2002-160339 (Patent Document 4) discloses a multilayer laminate film produced by alternately stacking layers of polyethylene-2, 6-naphthalate and layers of a thermoplastic resin with a refractive index lower than that of polyethylene-2,6-naphthalate into at least 11-layer laminate to selectively reflect a light in an optional wavelength range. However, the structure of Patent Document 4 is insufficient in transparency, and the heat shrinkability is not examined in detail.

As described above, the conventional heat-shrinkable polyester films having properties required for use in a shrink label (such as heat shrinkability and handling property) do not have satisfactory designability. Thus, there is a demand nowadays for a heat-shrinkable polyester film excellent in, in addition to the heat shrinkability and handling property on a shrink label, high transparency, luster, and designability.

Patent Document 1: JP-A-9-174684
Patent Document 2: JP-A-2007-152943
Patent Document 3: JP-T-9-506837
Patent Document 4: JP-A-2002-160339

Disclosure of the Invention

Problems that the Invention is to Solve

An object of the present invention is to solve the above conventional problems, thereby providing a heat-shrinkable polyester film, which has a high transparency, a particular wavelength light reflectivity, and thus a high iridescent metallic lustrous designability to be excellent in visibility of a pattern printed thereon, and further has an iridescent metallic luster and a heat shrinkability allowing its attachment on a container such as a PET bottle.

Means for Solving the Problems

The above object of the present invention has been achieved by (Item 1) a heat-shrinkable polyester film comprising a laminate structure (I) and a thickness control layer (II), wherein the laminate structure (I) comprises alternately stacked first and second layers within a range of 25 to 1001 layers, the first layer comprises a polyester (A) composed mainly of ethylene terephthalate and has a thickness of 0.02 to 0.4 μm, the second layer comprises a polyester (B) composed mainly of ethylene-2, 6-naphthalene dicarboxylate and has a thickness of 0.03 to 0.5 μm, the thickness control layer (II) is formed on both sides of the laminate structure (I) and comprises a polyester (C) composed mainly of ethylene terephthalate, the ratio of the total thickness of the first layers and the thickness control layers (II) to the entire thickness of the film is 86% to 96%, the film has at least one reflection peak with a reflectance of 30% or more within a wavelength range of 400 to 800 nm in a reflectance curve, and when the film is placed in a warm water at 80°C for 10 seconds, the heat shrinkage of the film is 30% or more in one direction of the longitudinal direction and the width direction, and at least 0% but less than 10% in absolute value in a direction perpendicular to the one direction.

The invention further includes the following embodiments.

Item 2. A heat-shrinkable polyester film according to Item 1, wherein the film has a haze of 0.1% to 10%.

Item 3. A heat-shrinkable polyester film according to Item 1 or 2, wherein the polyester (A) composed mainly of ethylene terephthalate has a glass-transition temperature ($Tg_1$) of higher than 70°C but at most 100°C.

Item 4. A heat-shrinkable polyester film according to any of Items 1 to 3, wherein the difference between the glass-transition temperature ($Tg_1$) of the polyester (A) composed mainly of ethylene terephthalate and the glass-transition temperature ($Tg_2$) of the polyester (B) composed mainly of ethylene-2,6-naphthalene dicarboxylate satisfies the following inequality (1):

$$-55°C < (Tg_1 - Tg_2) < -20°C \qquad (1).$$

Item 5. A heat-shrinkable polyester film according to any of Items 1 to 4, wherein the ratio of the total thickness of the thickness control layers (II) to the entire thickness of the film is 50% to 85%.

Item 6. A heat-shrinkable polyester film according to any of Items 1 to 5, wherein at least one of the first layer, the second layer, and the thickness control layer (II) contains at least 0% but less than 0.1% by weight of a particle.

Item 7. A shrink label comprising a heat-shrinkable polyester film according to any of Items 1 to 6.

An iridescent metallic luster can be obtained by alternately stacking resin layers having different refractive indices within a predetermined thickness range. The heat shrinkage of a shrink label for a PET bottle at around 80°C can be increased by using a film containing at least a predetermined amount of a resin having a glass-transition temperature near the processing temperature. However, a film excellent in both the metallic luster and heat shrinkability cannot be obtained only by using an alternate laminate structure as in conventional technologies. The invention has been accomplished in view of the problem. Thus, the inventors have found that a film, which has a heat shrinkability, an iridescent metallic luster, and a transparent appearance while having a composition containing a large amount of a resin with a glass-transition temperature near the shrinkage processing temperature, can be obtained by forming thickness control layers containing a resin with a glass-transition temperature near the shrinkage processing temperature within a predetermined thickness range on both sides of an alternate laminate structure of resins having different refractive indices. The invention has been completed based on the finding.

Advantage of the Invention

According to the present invention, there is provided the heat-shrinkable polyester film, which has a high transparency, a particular wavelength light reflectivity, and thus a high lustrous designability to be excellent in visibility of a pattern printed thereon, and further has an iridescent metallic luster and a heat shrinkability allowing its attachment on a container such as a PET bottle. The film can be suitably used for a shrink label on a PET bottle, and also for an electric wire coating requiring the heat shrinkability and designability.

Best Mode for Carrying Out the Invention

The present invention will be described in detail below.

[First layer]

The first layer according to the invention contains the polyester (A) composed mainly of ethylene terephthalate. The term "composed mainly of ethylene terephthalate" means that the ratio of ethylene terephthalate is 80 to 100 mol% based on the total acid components in the polyester (A). In the polyester (A), the lower limit of the ratio of the main component is preferably 85 mol% based on the total acid components. The polyester (A) in the first layer according to the invention can exhibit a sufficient shrinkability in a shrinkage processing of a shrink label because of the main component of ethylene terephthalate.
The first layer according to the invention consists essentially of the polyester (A), and may contain only a small amount of a particle as long as the object of the invention is not adversely affected. Further, the first layer may contain only a small amount of a colorant, an antistatic, an antioxidant, an organic lubricant, a catalyst, an ultraviolet absorber, etc.

The polyester (A) in the first layer may contain a polyethylene terephthalate singly, and may contain a blend thereof with a small amount of another polyester resin or a copolymer thereof with another copolymerization component. The small amount is 0 to 20 mol% based on the total acid components in the polyester (A), and the upper limit of the amount is preferably 15 mol%.

Examples of dicarboxylic acid components usable for the copolymer include aromatic dicarboxylic acids such as isophthalic acid, phthalic acid, and 2, 6-naphthalenedicarboxylic acid, and aliphatic dicarboxylic acids such as adipic acid, azelaic acid, sebacic acid, and 1,10-decanedicarboxylic acid. Examples of diol components usable for the copolymer include aliphatic diols such as 1,4-butanediol, 1,6-hexanediol, and neopentyl glycol, and alicyclic diols such as 1,4-cyclohexanedimethanol. Preferred among the copolymerization components are isophthalic acid and 2,6-naphthalenedicarboxylic acid, and the copolymerization components may be used singly or in combination of two or more.

In the case of using isophthalic acid as the copolymerization component, the metallic luster of the film is advantageously increased because the resultant copolymer has a refractive index difference from the polyester in the second layer larger than that of the copolymer using 2,6-naphthalenedicarboxylic acid. On the other hand, in the case of using 2,6-naphthalenedicarboxylic acid as the copolymerization component, the formation and layer structure control of the film can be achieved more easily because the resultant copolymer has a composition closer to that of the polyester in the second layer. Furthermore, in the case of using isophthalic acid and 2,6-naphthalenedicarboxylic acid in combination as the copolymerization components, the resultant copolymer has the effects of both components.

In a case where a small amount of the other polyester resin is blended, examples of the blend components include polyethylene-2,6-naphthalene dicarboxylates, polyethylene isophthalates, and polybutylene terephthalates.

The glass-transition temperature ($Tg_1$) of the polyester (A) composed mainly of ethylene terephthalate in the first layer is preferably higher than 70°C but at most 100°C, more preferably 75°C or higher. The upper limit of the glass-transition temperature ($Tg_1$) of the polyester (A) is more preferably 95°C, further preferably 90°C, particularly preferably 85°C.

When the glass-transition temperature ($Tg_1$) of the polyester (A) is less than the lower limit, the glass-transition temperature difference between the polyester (A) and the polyester (B) composed mainly of ethylene-2,6-naphthalene dicarboxylate in the second layer (i.e. the other layer in the alternate stack formed to obtain a metallic luster) is often excessively increased, thereby resulting in low film formability. On the other hand, when the glass-transition temperature ($Tg_1$) of the polyester (A) is higher than the upper limit, the film often cannot exhibit a sufficient shrinkability in a shrinkage processing of the shrink label at around 80°C.

The polyester (A) composed mainly of ethylene terephthalate may be produced by a known method. For example, the polyester (A) may be produced by a method containing the steps of subjecting terephthalic acid, ethylene glycol, and an optional copolymerization component to an esterification reaction, and subjecting the reaction product to a polycondensation reaction to obtain a polyester. Alternatively, the polyester (A) may be produced by a method containing the steps of subjecting derivatives of the starting material monomers to a transesterification reaction, and subjecting the reaction product to a polycondensation reaction to obtain a polyester. In the case of forming the first layer containing a small amount of the colorant, antistatic, antioxidant, organic lubricant, catalyst, ultraviolet absorber, etc., the additive may be added for example in the film formation process or the polyester (A) production process.

The intrinsic viscosity of the polyester (A) in the first layer is preferably 0.55 to 0.80 dl/g, more preferably 0.55 to 0.75 dl/g. When the intrinsic viscosity of the polyester (A) in the first layer is not within this range, the film formability may be deteriorated though the film can be formed.

[Second layer]

The second layer according to the invention contains the polyester (B) composed mainly of ethylene-2,6-naphthalene dicarboxylate. The term "composed mainly of ethylene-2, 6-naphthalene dicarboxylate" means that the ratio of ethylene-2,6-naphthalene dicarboxylate is 80 to 100 mol% based on the total acid components in the polyester (B). In the polyester (B), the lower limit of the ratio of the main component is preferably 85 mol%, more preferably 90 mol%, based on the total acid components.

When the polyester (B) in the second layer according to the invention is a polyester whose main component is ethylene-2,6-naphthalene dicarboxylate, a refractive index difference between the first layer and the second layer becomes 0.05 or more, and when the first layer and the second layer are made into the alternate laminate structure to be hereinafter described, a reflection peak with a reflectance of 30% or more within a wavelength range of 400 to 800 nm in a reflectance curve is provided, and a metallic luster is exhibited. It is preferred that the polyester (A) in the first layer has a refractive index of 1.60 to 1.70, the polyester (B) in the second layer has a refractive index of 1.70 to 1.80, and the refractive index of the second layer is larger than that of the first layer by 0.05 or more.

The second layer according to the invention consists essentially of the polyester (B), and may contain only a small amount of a particle as long as the object of the invention is not adversely affected. Further, the second layer may contain only a small amount of a colorant, an antistatic, an antioxidant, an organic lubricant, a catalyst, an ultraviolet absorber, etc.

The polyester (B) in the second layer may contain a polyethylene-2,6-naphthalene dicarboxylate singly, and may contain a blend thereof with a small amount of another polyester resin or a copolymer thereof with another copolymerization component. The small amount is 0 to 20 mol% based on the total acid components in the polyester (B), and the upper limit of the amount is preferably 15 mol%, more preferably 10 mol%.

Examples of dicarboxylic acid components usable for the copolymer include aromatic dicarboxylic acids such as isophthalic acid, phthalic acid, and terephthalic acid, and aliphatic dicarboxylic acids such as adipic acid, azelaic acid, sebacic acid, and 1,10-decanedicarboxylic acid. Examples of diol components usable for the copolymer include aliphatic diols such as 1,4-butanediol, 1,6-hexanediol, and neopentyl glycol, and alicyclic diols such as 1,4-cyclohexanedimethanol. Preferred among the copolymerization components are isophthalic acid and terephthalic acid. In the case of using terephthalic acid as the copolymerization component, the formation and layer structure control of the film can be achieved more easily because the resultant copolymer has a composition closer to that of the polyester in the first layer.

In a case where a small amount of the other polyester resin is blended, examples of the blend components include polyethylene terephthalates, polyethylene isophthalates, and polybutylene terephthalates.

The glass-transition temperature ($Tg_2$) of the polyester (B) composed mainly of ethylene-2, 6-naphthalene dicarboxylate in the second layer is preferably 95°C to 125°C . The lower limit of the glass-transition temperature ($Tg_2$) of the polyester (B) is more preferably 100°C, further preferably 105°C. The upper limit of the glass-transition temperature ($Tg_2$) of the polyester (B) is more preferably 120°C. The lower limit of the glass-transition temperature ($Tg_2$) of the polyester (B) is limited to the above value naturally depending on the main component and the copolymerization component of the polyester (B). When the glass-transition temperature ($Tg_2$) of the polyester (B) is higher than the upper limit, the glass-transition temperature difference between the polyester (B) and the polyester (A) composed mainly of ethylene terephthalate in the first layer (i.e. the other layer in the alternate stack formed to obtain a metallic luster) is often excessively increased, thereby resulting in low film formability and low heat shrinkability.

The polyester (B) composed mainly of ethylene-2,6-naphthalene dicarboxylate may be produced by a known method. For example, the polyester (B) may be produced by a method containing the steps of subjecting ethylene-2,6-naphthalenedicarboxylic acid, ethylene glycol, and an optional copolymerization component to an esterification reaction, and subjecting the reaction product to a polycondensation reaction to obtain a polyester. Alternatively, the polyester (B) may be produced by a method containing the steps of subjecting derivatives of the starting material monomers to a transesterification reaction, and subjecting the reaction product to a polycondensation reaction to obtain a polyester. In the case of forming the second layer containing a small amount of the colorant, antistatic, antioxidant, organic lubricant, catalyst, ultraviolet absorber, etc., the additive may be added for example in the film formation process or the polyester (B) production process.

The intrinsic viscosity of the polyester (B) in the second layer is preferably 0.40 to 0.65 dl/g, more preferably 0.45 to 0.62 dl/g. When the intrinsic viscosity of the polyester (B) in the second layer is not within this range, the film formability may be deteriorated though the film can be formed.

[Glass-transition temperature]

In the invention, the difference between the glass-transition temperature ($Tg_1$) of the polyester (A) composed mainly of ethylene terephthalate and the glass-transition temperature ($Tg_2$) of the polyester (B) composed mainly of ethylene-2,6-naphthalene dicarboxylate preferably satisfies the following inequality (1):

$$-55°C < (Tg_1 - Tg_2) < -20°C \qquad (1).$$

The glass-transition temperature difference ($Tg_1$-$Tg_2$) between the polyester (A) and the polyester (B) is more preferably -50°C to -25°C, further preferably -45°C to -25°C. When the glass-transition temperature difference ($Tg_1$-$Tg_2$) is less

than the lower limit, the glass-transition temperature difference between the polyester (A) and the polyester (B) in the alternate stack is often excessively large, thereby resulting in low film formability. The upper limit of the glass-transition temperature difference ($Tg_1$-$Tg_2$) is limited to the above value depending on the polyester components in the layers.

The preferred glass-transition temperature difference can be obtained by controlling the types and amounts of the main components and small-amount components in the polyester (A) in the first layer and the polyester (B) in the second layer within the above described ranges.

[Thickness control layer (II)]

The thickness control layer (II) according to the invention contains the polyester (C) composed mainly of ethylene terephthalate. The term "composed mainly of ethylene terephthalate" means that the ratio of ethylene terephthalate is 80 to 100 mol% based on the total acid components in the polyester (C). In the polyester (C), the lower limit of the ratio of the main component is preferably 85 mol% based on the total acid.components. The polyester (C) in the thickness control layer (II) according to the invention can exhibit a sufficient shrinkability in a shrinkage processing of the shrink label because of the main component of ethylene terephthalate.

The thickness control layer (II) according to the invention consists essentially of the polyester (C), and may contain only a small amount of a particle as long as the object of the invention is not adversely affected. Further, the thickness control layer (II) may contain only a small amount of a colorant, an antistatic, an antioxidant, an organic lubricant, a catalyst, an ultraviolet absorber, etc.

The polyester (C) in the thickness control layer (II) may contain a polyethylene terephthalate singly, and may contain a blend thereof with a small amount of another polyester resin or a copolymer thereof with another copolymerization component. The small amount is 0 to 20 mol% based on the total acid components in the polyester (C), and the upper limit of the amount is preferably 15 mol%.

Examples of dicarboxylic acid components usable for the copolymer include aromatic dicarboxylic acids such as isophthalic acid, phthalic acid, and 2, 6-naphthalenedicarboxylic acid, and aliphatic dicarboxylic acids such as adipic acid, azelaic acid, sebacic acid, and 1,10-decanedicarboxylic acid. Examples of diol components usable for the copolymer include aliphatic diols such as 1,4-butanediol, 1,6-hexanediol, and neopentyl glycol, and alicyclic diols such as 1,4-cyclohexanedimethanol. Preferred among the copolymerization components are isophthalic acid and 2,6-naphthalenedicarboxylic acid, and the copolymerization components may be used singly or in combination of two or more.

In a case where a small amount of the other polyester resin is blended, examples of the blend components include polyethylene-2,6-naphthalene dicarboxylates, polyethylene isophthalates, and polybutylene terephthalates.

The glass-transition temperature ($Tg_1$') of the polyester (C) composed mainly of ethylene terephthalate in the thickness control layer (II) is preferably higher than 70°C but at most 100°C, more preferably 75°C to 95°C, further preferably 75°C to 90°C, particularly preferably 75°C to 85°C. When the glass-transition temperature ($Tg_1$') of the polyester (C) is less than the lower limit, the glass-transition temperature difference of the polyester (C) from the polyester (A) and the polyester (B) is often excessively increased, thereby resulting in low film formability. On the other hand, when the glass-transition temperature ($Tg_1$') of the polyester (C) is higher than the upper limit, the film often cannot exhibit a sufficient shrinkability in a shrinkage processing of the shrink label at around 80°C.

The polyester (C) composed mainly of ethylene terephthalate may be produced by a known method. For example, the polyester (C) may be produced by a method containing the steps of subjecting terephthalic acid, ethylene glycol, and an optional copolymerization component to an esterification reaction, and subjecting the reaction product to a polycondensation reaction to obtain a polyester. Alternatively, the polyester (C) may be produced by a method containing the steps of subjecting derivatives of the starting material monomers to a transesterification reaction, and subjecting the reaction product to a polycondensation reaction to obtain a polyester. In the case of forming the thickness control layer (II) containing a small amount of the colorant, antistatic, antioxidant, organic lubricant, catalyst, ultraviolet absorber, etc., the additive may be added for example in the film formation process or the polyester (C) production process.

The intrinsic viscosity of the polyester (C) in the thickness control layer (II) is preferably 0.55 to 0.80 dl/g, more preferably 0.55 to 0.75 dl/g. When the intrinsic viscosity of the polyester (C) in the thickness control layer (II) is not within this range, the film formability may be deteriorated though the film can be formed.

It is preferred that the polyester (C) composed mainly of ethylene terephthalate is the same as the polyester (A) composed mainly of ethylene terephthalate in the first layer. When the polyester (C) is the same as the polyester (A), the same extruder can be used for preparing the layers thereof in the film production.

The thickness control layer (II) according to the invention is formed on both sides of the alternate laminate structure (I) of the first and second layers.

The thickness control layer (II) is provided for the purse of: incorporating to the film a predetermined amount or more of the polyester having the glass-transition temperature near the shrinkage processing temperature of around 80°C, at which the shrink label for a PET bottle is shrunk, in order to increase the heat shrinkage of the shrink label for a PET bottle at around the temperature; and controlling the thickness of the stack of the first and second layers within a predetermined thickness range in which a metallic luster is exhibited. In addition, by forming the thickness control layer (II) on the outermost surfaces on both sides of the film, the film can have smooth surfaces and an increased transparency.

In the case of not using the thickness control layer (II) on the film of the invention, the film should contain 86% or more of the polyester (A) based on the film thickness to obtain a sufficient heat shrinkability. In this case, the thicknesses of the first and second layers are not within predetermined thickness ranges, thereby failing to obtain a satisfactory metallic luster. Furthermore, the thicknesses of the layers in the vicinity of the film surface are deteriorated, resulting in poor transparency.

[Stack structure of film]

The heat-shrinkable polyester film of the invention has the laminate structure (I) and the thickness control layer (II) . The laminate structure (I) is formed by alternately stacking the first layer containing the polyester (A) composed mainly of ethylene terephthalate and the second layer containing the polyester (B) composed mainly of ethylene-2,6-naphthalene dicarboxylate, and the thickness control layer (II) containing the polyester (C) composed mainly of ethylene terephthalate is formed on both sides thereof.

In the laminate structure (I), from the viewpoint of the metallic luster color developed by light interference, each first layer should have a thickness of 0.02 to 0.4 $\mu$m, each second layer should have a thickness of 0.03 to 0.5 $\mu$m, and the number of the alternately stacked first and second layers should be within a range of 25 to 1001.

When the first and second layers each have a thickness within the above range, the film has a reflection peak in a wavelength range of 400 to 800 nm, thereby showing a reflected color in the visible region. When the first and second layers each have a thickness smaller than the above lower limit, the film reflects a wavelength in the ultraviolet region, thereby failing to show the color. On the other hand, when each layer has a thickness larger than the above upper limit, the film reflects a wavelength in the infrared region, thereby failing to show the color.

In addition, when the number of the stacked layers is smaller than the above lower limit, the light interference of the film is not sufficient, thereby failing to show the color. On the other hand, when the number of the stacked layers is larger than the above upper limit, each layer has a thickness smaller than the above lower limit, so that the film reflects a wavelength in the ultraviolet region, thereby failing to show the color.

The lower limit of the number of the stacked layers in the laminate structure (I) is preferably 45, more preferably 75. The layer number is not particularly limited within the range of at most 1001 from the viewpoint of the metallic luster. In view of industrial use, the upper limit is preferably at most 701, more preferably at most 501, further preferably at most 201.

The heat-shrinkable polyester film of the invention exhibits a high reflection peak intensity in a reflectance curve and an excellent color when the first and second layers each have uniform thicknesses within the above thickness ranges and thus small thickness nonuniformities.

In the heat-shrinkable polyester film of the invention, the ratio of the total thickness of the first layers and the thickness control layers (II) to the entire thickness of the film is 86% to 96%. Each of the first layer and the thickness control layer (II) contains the polyester composed mainly of ethylene terephthalate, which has the glass-transition temperature near the temperature of around 80°C for shrinkage-processing the shrink label for a PET bottle. When the ratio of the total thickness of the first layers and the thickness control layers (II) to the entire film thickness is smaller than the lower limit, the film cannot have a satisfactory heat shrinkability at the shrinkage processing temperature. On the other hand, when the ratio of the total thickness of the first layers and the thickness control layers (II) to the entire film thickness is larger than the upper limit, the thicknesses of the layers in the laminate structure (I) are made nonuniform (the thickness nonuniformity is deteriorated), thereby failing to obtain a satisfactory color.

In the heat-shrinkable polyester film of the invention, the ratio of the total thickness of the second layers to the entire film thickness is 4% to 14%. When the ratio of the total thickness of the second layers containing the polyester (B) to the entire film thickness is smaller than the lower limit, the thicknesses of the layers in the laminate structure (I) are deteriorated, thereby failing to obtain a satisfactory color. On the other hand, when the ratio of the total thickness of the second layers containing the polyester (B) to the entire film thickness is larger than the upper limit, the film cannot have a satisfactory heat shrinkability at the shrinkage processing temperature.

In the heat-shrinkable polyester film of the invention, the ratio of the total thickness of the thickness control layers (II) to the entire film thickness is preferably 50% to 85%. When the ratio of the total thickness of the thickness control layers (II) to the entire film thickness is smaller than the lower limit, the amount of the polyester (A) in the first layer may be relatively increased in the film to increase the total thickness of the first layers above the upper limit, so that the film often reflects a wavelength in the infrared region, thereby failing to show the color. On the other hand, when the ratio of the total thickness of the thickness control layers (II) to the entire film thickness is larger than the upper limit, the amount of the polyester (A) in the first layer may be relatively reduced in the film to lower the total thickness of the first layers below the lower limit, so that the film often reflects a wavelength in the ultraviolet region, thereby failing to show the color.

The entire thickness of the heat-shrinkable polyester film of the invention is preferably 30 to 80 $\mu$m, more preferably 35 to 60 $\mu$m. When the entire film thickness is smaller than the lower limit, the film may be poor in consistency, resulting in deteriorated handling in the processing. On the other hand, when the entire film thickness is larger than the upper limit, the film may be excessively hard, resulting in deteriorated handling in the processing.

[Particle]

The heat-shrinkable polyester film of the invention may contain a particle for the purpose of improving the lubricity of the film, etc. From the viewpoint of increasing the film transparency, it is preferred that the film contains none or only a small amount of the particle. Specifically, it is preferred that at least one of the first layer, the second layer, and the thickness control layer (II) contains at least 0% but less than 0.1% by weight of the particle. The lower limit of the particle content is. more preferably 0.005% by weight, further preferably 0.01% by weight. The particle content is more preferably at most 0.08% by weight, further preferably at most 0.06% by weight.
The particle content is the weight ratio (%) of the particle based on the weight of the layer containing the particle.
At least one of inorganic particles of calcium carbonate, silica, talc, cray, etc. and organic particles of a thermoplastic or thermohardening resin such as a silicone or an acrylic resin, etc. may be used as the particle. The particle is preferably a completely spherical silica particle. The average particle diameter of the particle is not particular limited in the range of 0.001 to 5 $\mu$m, and is more preferably 0.01 to 3 $\mu$m.

[Film properties]

The heat-shrinkable polyester film of the invention has the layers containing the above resin components in the above stack structure, and thereby has at least one reflection peak with a reflectance of 30% or more within a wavelength range of 400 to 800 nm in a reflectance curve. The reflectance of the reflection peak is preferably 50% or more, more preferably 70% or more. As the reflectance is increased, the brilliance of the metallic luster color is improved. Though the film preferably has a higher reflectance of the reflection peak, the reflectance is preferably at most 95%, more preferably at most 90%.
When the film has the reflection peak within the wavelength range of less than 400 nm or more than 800 nm out of the visible region, the film has no metallic luster color. Furthermore, when the reflectance of the reflection peak is smaller than the lower limit, a sufficient reflected color cannot be observed.
The reflectance curve can be obtained such that a polarizing plate is sandwiched between the film and a light-receiving portion in accordance with the main orientation direction (which may be referred to as the high shrinkage direction or the main shrinkage direction), and the specular reflectance relative to an aluminum-deposited mirror is measured using a spectrophotometer at each wavelength of 400 to 800 nm. The term "a reflectance of 30% or more in a reflectance curve" means that a peak reflectance value among reflectance values measured at each wavelength is 30% or more.
The reflectance property can be obtained when the 25 to 1001 layers of the first and second layers containing the different refractive resins (the polyester (A) composedmainly of ethylene terephthalate and the polyester (B) composedmainly of ethylene-2,6-naphthalene dicarboxylate) are alternately stacked, and the first and second layers of the resins have uniform thicknesses within the ranges of 0.02 to 0.4 $\mu$m and 0.03 to 0.5 $\mu$m respectively.
When the heat-shrinkable polyester film of the invention is placed in a warm water at 80°C for 10 seconds, the heat shrinkage of the film is 30% or more in one direction of the longitudinal direction and the width direction of the film. When the heat shrinkage in the high shrinkage direction is smaller than the lower limit after the treatment in the warm water at 80°C for 10 seconds, the film is poor in shrinkage amount at the processing temperature of the shrink label, failing to achieve a sufficient adhesion between the shrink label and a PET bottle. It is preferred from the viewpoint of adhesion that the film has a higher heat shrinkage in the high shrinkage direction after the treatment in the warm water at 80°C for 10 seconds. The upper limit of the heat shrinkage is at most about 70% in view of the appearance after the shrinkage.
The heat shrinkage property can be obtained when the ratio of the total thickness of the first layers containing the polyester (A) and the thickness control layers (II) to the entire film thickness is 86% or more, and the film is stretched in the main shrinkage direction at a stretching ratio of 2.5-to 4.5-times.
When the heat-shrinkable polyester film of the invention is placed in the warm water at 80°C for 10 seconds, the heat shrinkage of the film is at least 0% but less than 10% in absolute value in a direction perpendicular to the above one direction in which the heat shrinkage is 30% or more. When the heat shrinkage in the low shrinkage direction is larger than the upper limit in absolute value after the treatment in the warm water at 80°C for 10 seconds, a portion with shrinkage nonuniformity (a so-called vertical shrinkage deterioration) is generated. It is preferred that the film has a lower heat shrinkage in absolute value in the low shrinkage direction within the above range after the treatment in the warm water at 80°C for 10 seconds. The heat shrinkage is generally 5% or less, more preferably 4% or less.

In view of achieving the heat shrinkage property, it is preferred that the film is not stretched in the direction perpendicular to the high shrinkage direction to lower the shrinkage. The film may be stretched in this direction at a low stretching ratio of 1.5-times or less to increase the film strength.

The heat shrinkage after the treatment in the warm water at 80°C for 10 seconds is obtained by the steps of cutting a sample into a square having a size of 10 cm x 10 cm, dipping the sample in the warm water at 80°C for 10 seconds, cooling the sample in a cold water, measuring the distance between reference lines on the sample, and calculating the degree of shrinkage with respect to the original.

The haze of the heat-shrinkable polyester film of the invention, measured in accordance with JIS K7136, is preferably 0.1% to 10%. The lower limit of the haze is more preferably 0.2%, further preferably 0.3%, and the upper limit of the haze is more preferably 8%, further preferably 7%, particularly preferably 6%.

It is difficult to reduce the haze of the film below the lower limit because of the characteristics of the polyester resins used in the invention. When the haze is higher than the upper limit, the transparency of the film is often deteriorated, resulting in a cloudy appearance, a poor metallic luster, or a poor visibility of a design on a film undercoating.

The haze property can be obtained when the thickness control layer (II) having the predetermined thickness is disposed on both sides of the laminate structure (I) to prevent the deterioration of the laminate structure (I) in the vicinity of the film surface and to increase the surface smoothness of the film, and the particle content is controlled within the above range.

[Production method]

Next an example of a method for producing the heat-shrinkable polyester film of the invention will be described in detail below.

In the example of production of the heat-shrinkable polyester film of the invention, first, the polyester (A) for the first layer supplied from a first extruder and the polyester (B) for the second layer supplied from a second extruder are alternately stacked in the melt states using a multilayer feed block apparatus to form the laminate structure (I) having the 25 to 1001 layers. Then, the polyester (C) for the thickness control layer (II) supplied from a third extruder is stacked on both sides of the laminate structure (I) using a thickness-controlled feed block outermost layer. In a case where the polyester (C) for the thickness control layer (II) is the same as the polyester (A) for the first layer, part of the polyester (A) supplied from the first extruder may be stacked on both sides of the laminate structure (I) using a thickness-controlled feed block outermost layer to form the thickness control layer (II).

Then, the obtained melt stack is cast on a rotary drum using a die to prepare an unstretched multilayer film. The feed block portions corresponding to the laminate structure (I) are controlled to obtain the first and second layers with uniform thicknesses, whereby the thickness nonuniformities of the first and second layers can be prevented. Though the outermost layers of the laminate structure (I) are not particularly limited, it is preferred that the first layers are used as odd number layers and the second layers are used even number layers.

Thus obtained unstretched multilayer film is stretched in one of the film formation direction and the direction perpendicular thereto (the width direction). The stretching temperature is preferably equal to or higher than the glass-transition temperature (Tg) of the polyester (A) in the first layer but at most (Tg+50)°C. The stretching ratio is preferably 2- to 6-fold, more preferably 2.5- to 5-times by area. As the stretching ratio is increased, the thickness nonuniformities of the first and second layers are reduced due to thinning by the stretch, and the light interference uniformity of the stretched multilayer film is increased in the planar direction. In terms of the shrinkability, when the stretching ratio is excessively high, the shrinkability in the main shrinkage direction is deteriorated due to the crystallization, and the shrinkability in the direction perpendicular to the main shrinkage direction is disadvantageously increased. Thus, in the main shrinkage direction, the film is stretched at a stretching ratio of 2.5-to 4.5-times. Further, in the direction perpendicular to the main shrinkage direction, the film is not stretched or is stretched at a stretching ratio of 1. 5-times or less. The film may be heat-treated at a temperature of at least 70°C but less than 80°C to increase the shrinkage accuracy.

In a case where a primer layer or the like is formed in the above production, it is preferably formed for example by applying a water-dispersible coating material to one or both sides of the film after the longitudinal stretching, and by drying the material to form a coating before the transverse stretching. The material is preferably applied by a reverse roll coater though not restrictive.

Examples

The present invention will be described more specifically with reference to Examples.

Properties used in Examples and Comparative Examples were measured and evaluated by the following methods.

(1) Heat shrinkage

A film sample was cut into a square having a size of 10 cm × 10 cm, dipped in a warm water at 80°C for 10 seconds, taken out of the warm water, and introduced to a cold water. The distance between reference lines on the film sample was measured, and the heat shrinkage of the film was represented by the difference of the distance from the original on percentage using the equation:

$$S=100 \times (L_0-L)/L_0.$$

In this equation, S represents the heat shrinkage (unit: %), L represents the distance between the reference lines after the heat treatment (unit: mm), and $L_0$ represents the distance between the reference lines before the heat treatment (unit: mm).

(2) Light reflectance

A polarizing plate was sandwiched between a film and a light-receiving portion in accordance with the main orientation direction (the high shrinkage direction or the main shrinkage direction), and the specular reflectance relative to an aluminum-deposited mirror was measured using a spectrophotometer (MPC-3100 manufactured by Shimadzu Corporation) at each wavelength of 400 to 800 nm. The maximum reflectance value among the measured values was used as the maximum reflectance of the film, and the wavelength corresponding to the maximum reflectance was used as the reflection wavelength.
Furthermore, the designability of the film was evaluated by visual observation using the following scale.

○: A metallic luster color was observed.
×: A metallic luster color was not observed.

(3) Evaluation as shrinkage (shrink) film

A film sample was formed in a cylindrical shape as a shrink label, attached on a PET bottle, and shrunk by transferring through a shrink tunnel at a controlled temperature of 85°C. Whether the film sufficiently adhered to the PET bottle was evaluated by visual observation using the following scale after the shrink tunnel treatment.

o: The film closely adhered to the shape of the PET bottle, and a space was not observed between the film and PET bottle.
×: A space was observed between the film and PET bottle.

Furthermore, the shrinkage nonuniformity of the film was evaluated with respect to inclination and distortion of the upper and lower ends by visual observation using the following scale after the shrink tunnel treatment.

○: The inclination or distortion due to the shrinkage nonuniformity was not observed in the upper or lower end.
×: The inclination or distortion due to the shrinkage nonuniformity was observed in the upper and lower ends.

Furthermore, the designability of the film was evaluated with respect to the transparency and metallic luster by visual observation using the following scale after the shrink tunnel treatment.

A: A metallic luster color was observed, and the film was not hazy but transparent.
B: A metallic luster color was observed, and the film was hazy.
C: A metallic luster color was not observed, and the film was not hazy but transparent.
D: A metallic luster color was not observed, and the film was hazy.

(4) Thicknesses and numbers of layers

A cross section of a film sample was observed using a scanning electron microscope (S-4300SE/N manufactured by Hitachi Science Systems, Ltd.), the thicknesses of three first layers and three second layers were measured in the vicinity of the thickness direction center (n=3), and the average thicknesses of the first and second layers were calculated from the measured thicknesses. The thicknesses of three portions in each of both thickness control layers (II) were measured using the same microscope, and the average thickness of the thickness control layers (II) was calculated from the measured thicknesses.

Also the layer numbers were measured by observing the cross section of the film sample using the scanning electron microscope (S-4300SE/N manufactured by Hitachi Science Systems, Ltd.)

(5) Entire film thickness

The entire thicknesses of ten portions in a film were measured at a needle pressure of 30 g using an electronic micrometer (K-312A (trade name) manufactured by Anritsu Corporation), and the average entire film thickness was calculated from the measured thicknesses.

(6) Ratio of total thickness of first layers and thickness control layers (II) to entire film thickness

The total thickness of the first layers was obtained by multiplying the first layer thickness by the first layer number calculated in (4). The total thickness of the first layers and the thickness control layers (II) was obtained using the thickness control layer (II) thickness calculated in (4). Then, the ratio (%) of the total thickness of the first layers and the thickness control layers (II) to the entire film thickness calculated in (5) was calculated.

(7) Ratio of total thickness of thickness control layers (II) to entire film thickness

The ratio (%) of the total thickness of the thickness control layers (II) to the entire film thickness was calculated using the thickness control layer (II) thickness calculated in (4) and the entire film thickness calculated in (5).

(8) Haze

The haze of a film was measured in accordance with JIS K7136 using a haze meter (NDH-2000 manufactured by Nippon Denshoku Industries Co., Ltd.)

(9) Glass-transition temperature

About 10 mg of a film sample was enclosed in an aluminum measurement pan, which was attached to a differential calorimeter (V4.OB2000 DSC manufactured by Du Pont), heated from 25°C to 300°C at 20°C/minute, maintained at 300°C for 5 minutes, taken out from the differential calorimeter, and rapidly cooled on ice. The pan was attached to the differential calorimeter again, and heated from 25°C at 20°C/minute to measure the glass-transition temperature ($Tg$: °C).

(10) Intrinsic viscosity

The intrinsic viscosity ($[\eta]$ dl/g) was measured in an o-chlorophenol solution at 25°C.

(11) Amount of polyester component

The polyester component, copolymerization component, and amounts thereof of each layer in a film sample were identified using $^1$H-NMR measurement.

<Example 1>

A polyethylene terephthalate-naphthalate copolymer having a 2, 6-naphthalenedicarboxylic acid content of 12 mol%, an intrinsic viscosity of 0.70 dl/g, and a glass-transition temperature ($Tg_1$) of 83°C was prepared as a polyester (A) for a first layer and a polyester (C) for a thickness control layer (II). A polyethylene-2,6-naphthalene dicarboxylate homopolymer having an intrinsic viscosity of 0.51 dl/g and a glass-transition temperature ($Tg_2$) of 117°C was prepared as a polyester (B) for a second layer. Pellets of each polymer were heated at 110°C for 10 hours under stirring to crystallize the surface. Since the polyester (C) for the thickness control layer (II) is the same as the polyester (A) for the first layer, it is hereinafter referred to as the polyester (A).

Each of the polyester (A) and the polyester (B) was dried at 170°C for 4 hours, the polyester (A) was introduced to a first extruder, and the polyester (B) was introduced to a second extruder. Each polyester was converted to the melt state by heating to 290°C, the polyester (A) was divided into 99 first layers and 2 thickness control layers, and the polyester (B) was divided into 100 second layers. A melt laminate containing an alternate stack of the first and second layers was formed by using a multilayer feed block apparatus, and it was cast on a casting drum while maintaining the laminate structure, to prepare an unstretched multilayer film containing the alternately stacked 199 first and second layers and the thickness control layers formed on both sides thereof. The extrusion amount ratio of the polyester (A) for the first layers and the thickness control layers (II) was controlled at 87% (26% for the first layers and 61% for the thickness control layers (II)), and that of the polyester (B) for the second layers was controlled at 13%. The feed block was controlled to obtain the first and second layers each having a uniform thickness.

The unstretched multilayer film was not stretched in the continuous film formation direction, and was stretched at 80°C at 3.0-times in the width direction. The stretched film was heat-treated at 75°C for 3 seconds to obtain a film having a thickness of 60 $\mu$m. The properties of the obtained film are shown in Table 2.

<Example 2>

A 60-$\mu$m-thick film was produced in the same manner as Example 1 except that a polyethylene terephthalate homopolymer having an intrinsic viscosity of 0.65 dl/g and a glass-transition temperature ($Tg_1$) of 79°C was used as the polyester (A), the extrusion amount ratio of the polyester (A) for the first layers and the thickness control layers (II) was controlled at 90% (27% for the first layers and 63% for the thickness control layers (II)), and the extrusion amount ratio of the polyester (B) for the second layers was controlled at 10%. The properties of the obtained film are shown in Table 2.

<Example 3>

A 60-$\mu$m-thick film was produced in the same manner as Example 1 except that a polyethylene terephthalate-isophthalate copolymer having an isophthalic acid content of 12 mol%, an intrinsic viscosity of 0.71 dl/g, and a glass-transition temperature ($Tg_1$) of 74°C was used as the polyester (A), the extrusion amount ratio of the polyester (A) for the first layers and the thickness control layers (II) was controlled at 92% (28% for the first layers and 64% for the thickness control layers (II)), and the extrusion amount ratio of the polyester (B) for the second layers was controlled at 8%. The properties of the obtained film are shown in Table 2.

<Example 4>

A 60-$\mu$m-thick film was produced in the same manner as Example 1 except that a polyethylene naphthalate-terephthalate copolymer having a terephthalic acid content of 8 mol%, an intrinsic viscosity of 0.58 dl/g, and a glass-transition temperature ($Tg_2$) of 109°C was used as the polyester (B), the extrusion amount ratio of the polyester (A) for the first layers and the thickness control layers (II) was controlled at 92% (28% for the first layers and 64% for the thickness control layers (II)), and the extrusion amount ratio of the polyester (B) for the second layers was controlled at 8%. The properties of the obtained film are shown in Table 2.

<Example 5>

A 60-$\mu$m-thick film was produced in the same manner as Example 1 except that a 1:1 blend resin (by weight) of a polyethylene terephthalate-isophthalate copolymer having an isophthalic acid content of 12 mol%, an intrinsic viscosity of 0.71 dl/g, and a glass-transition temperature ($Tg_1$) of 74°C and a polyethylene terephthalate-naphthalate copolymer having a 2,6-naphthalenedicarboxylic acid content of 12 mol%, an intrinsic viscosity of 0.70 dl/g, and a glass-transition temperature ($Tg_1$) of 83°C was used as the polyester (A) for the first layers and the thickness control layers (II), a polyethylene-2,6-naphthalene dicarboxylate homopolymer having an intrinsic viscosity of 0.51 dl/g and a glass-transition temperature ($Tg_2$) of 117°C was used as the polyester (B) for the second layers, the extrusion amount ratio of the polyester (A) for the first layers and the thickness control layers (II) was controlled at 90% (27% for the first layers and 63% for the thickness control layers (II)), and the extrusion amount ratio of the polyester (B) for the second layers was controlled at 10%. The properties of the obtained film are shown in Table 2.

<Example 6>

A 60-$\mu$m-thick film was produced using the same polyester resins in the same manner as Example 1 except that completely spherical silica particles having an average particle diameter of 1.5 $\mu$m was added as a filler additive to the first layers and thickness control layers (II) in an amount of 0.05% by weight based on the layer weight, the extrusion amount ratio of the polyester (A) for the first layers and the thickness control layers (II) was controlled at 90% (27% for the first layers and 63% for the thickness control layers (II)), and the extrusion amount ratio of the polyester (B) for the second layers was controlled at 10%. The properties of the obtained film are shown in Table 2.

<Example 7>

A 60-$\mu$m-thick film was produced using the same polyester resins in the same manner as Example 1 except that completely spherical silica particles having an average particle diameter of 1.5 $\mu$m was added as a filler additive to the first layers and thickness control layers (II) in an amount of 0.1% by weight based on the layer weight, the extrusion amount ratio of the polyester (A) for the first layers and the thickness control layers (II) was controlled at 90% (27% for the first layers and 63% for the thickness control layers (II)), and the extrusion amount ratio of the polyester (B) for the second layers was controlled at 10%. The properties of the obtained film are shown in Table 2.

<Comparative Example 1>

A 60-$\mu$m-thick film was produced in the same manner as Example 1 except that a polyethylene terephthalate-isophthalate copolymer having an isophthalic acid content of 12 mol%, an intrinsic viscosity of 0.71 dl/g, and a glass-transition temperature ($Tg_1$) of 74°C was used as the polyester (A), the extrusion amount ratio of the polyester (A) for the first layers and the thickness control layers (II) was controlled at 83% (25% for the first layers and 58% for the thickness control layers (II)), and the extrusion amount ratio of the polyester (B) for the second layers was controlled at 17%. The properties of the obtained film are shown in Table 2.

<Comparative Example 2>

The film formation process was carried out using the same polyester resins in the same manner as Example 1 except that the extrusion amount ratio of the polyester (A) for the first layers and the thickness control layers (II) was controlled at 97% (29% for the first layers and 68% for the thickness control layers (II)), and the extrusion amount ratio of the polyester (B) for the second layers was controlled at 3%. As a result, the polyester (B) for the second layers could not be extruded uniformly in the die width direction, thereby failing to produce a film.

<Comparative Example 3>

A 60-$\mu$m-thick film was produced in the same manner as Example 1 except that a polyethylene-2,6-naphthalene dicarboxylate homopolymer having an intrinsic viscosity of 0.51 dl/g and a glass-transition temperature ($Tg_1$) of 117°C was used as the polyester (A) for the first layers and the thickness control layers (II), a a polyethylene terephthalate-isophthalate copolymer having an isophthalic acid content of 12 mol%, an intrinsic viscosity of 0.71 dl/g, and a glass-transition temperature ($Tg_2$) of 74°C was used as the polyester (B) for the second layers, the extrusion amount ratio of the polyester (A) for the first layers and the thickness control layers (II) was controlled at 87% (26% for the first layers and 61% for the thickness control layers (II)), and the extrusion amount ratio of the polyester (B) for the second layers was controlled at 13%. The properties of the obtained film are shown in Table 2.

<Comparative Example 4>

The film formation process was carried out using the same polyester resins in the same manner as Comparative Example 3 except that the extrusion amount ratio of the polyester (A) for the first layers and the thickness control layers (II) was controlled at 92% (28% for the first layers and 64% for the thickness control layers (II)), and the extrusion amount ratio of the polyester (B) for the second layers was controlled at 8%. As a result, the polyester (B) for the second layers could not be extruded uniformly in the die width direction, thereby failing to produce a film.

<Comparative Example 5>

A 60-$\mu$m-thick film was produced using the same polyester resins in the same manner as Example 1 except that the extrusion amount ratio of the polyester (A) for the first layers and the thickness control layers (II) was controlled at 88% (26% for the first layers and 62% for the thickness control layers (II)), the extrusion amount ratio of the polyester (B) for the second layers was controlled at 12%, the polyester (A) was divided into 9 first layers, and the polyester (B) was divided into 10 second layers. The properties of the obtained film are shown in Table 2.

<Comparative Example 6>

A 60-$\mu$m-thick film was produced using the same polyester resins in the same manner as Example 1 except that the extrusion amount ratio of the polyester (A) for the first layers was controlled at 86%, the extrusion amount ratio of the polyester (B) for the second layers was controlled at 14%, the polyester (A) was divided into 101 first layers, the polyester (B) was divided into 100 second layers, and the thickness control layers (II) were not formed. The properties of the obtained film are shown in Table 2.

<Comparative Example 7>

A 60-μm-thick film was produced using the same polyester resins in the same manner as Example 1 except that the extrusion amount ratio of the polyester (A) for the first layers and the thickness control layers (II) was controlled at 83% (25% for the first layers and 58% for the thickness control layers (II)), and the extrusion amount ratio of the polyester (B) for the second layers was controlled at 17%. The properties of the obtained film are shown in Table 2.

[Table 1]

| | First layer | | | | Second layer | | | | $Tg_1$-$Tg_2$ [°C] | Total layer number of laminate structure (I) | Thickness control layer | | Entire film thickness μm | Stretching ratio | Stretching temperature (°C) |
|---|---|---|---|---|---|---|---|---|---|---|---|---|---|---|---|
| | Resin | $Tg_1$ [°C] | Extrusion amount ratio [%] | Layer number | Resin | $Tg_2$ [°C] | Extrusion amount ratio [%] | Layer number | | | Resin | Extrusion amount ratio [%] | | | |
| Ex. 1 | NDC12PET | 83 | 26 | 99 | homo-PEN | 117 | 13 | 100 | -34 | 199 | NDC12PET | 61 | 60 | 3.0 | 80 |
| Ex. 2 | homo-PET | 79 | 27 | 99 | homo-PEN | 117 | 10 | 100 | -38 | 199 | homo-PET | 63 | 60 | 3.0 | 80 |
| Ex. 3 | IA12PET | 74 | 28 | 99 | homo-PEN | 117 | 8 | 100 | -43 | 199 | IA12PET | 64 | 60 | 3.0 | 80 |
| Ex. 4 | NDC12PET | 83 | 28 | 99 | TA8PEN | 109 | 8 | 100 | -26 | 199 | NDC12PET | 64 | 60 | 3.0 | 80 |
| Ex. 5 | IA12PET//NDC12PET (1:1) | 74// 83 | 27 | 99 | homo-PEN | 117 | 10 | 100 | -43 -34 | 199 | IA12PET//NDC12PET (1:1) | 63 | 60 | 3.0 | 80 |
| Ex. 6 | NDC12PET | 83 | 27 | 99 | homo-PEN | 117 | 10 | 100 | -34 | 199 | NDC12PET | 63 | 60 | 3.0 | 80 |
| Ex. 7 | NDC12PET | 83 | 27 | 99 | homo-PEN | 117 | 10 | 100 | -34 | 199 | NDC12PET | 63 | 60 | 3.0 | 80 |
| Comp. 1 | IA12PET | 74 | 25 | 99 | homo-PEN | 117 | 17 | 100 | -43 | 199 | IA12PET | 58 | 60 | 3.0 | 80 |
| Comp. 2 | NDC12PET | 83 | 29 | 99 | homo-PEN | 117 | 3 | 100 | -34 | 199 | NDC12PET | 68 | - | - | 80 |
| Comp. 3 | homo-PEN | 117 | 26 | 99 | IA12PET | 74 | 13 | 100 | 43 | 199 | homo-PEN | 61 | 60 | 3.0 | 130 |
| Comp. 4 | homo-PEN | 117 | 28 | 99 | IA12PET | 74 | 8 | 100 | 43 | 199 | homo-PEN | 64 | - | - | 130 |
| Comp. 5 | NDC12PET | 83 | 26 | 9 | homo-PEN | 117 | 12 | 10 | -34 | 19 | NDC12PET | 62 | 60 | 3.0 | 80 |
| Comp. 6 | NDC12PET | 83 | 86 | 101 | homo-PEN | 117 | 14 | 100 | -34 | 201 | - | - | 60 | 3.0 | 80 |
| Comp. 7 | NDC12PET | 83 | 25 | 99 | homo-PEN | 117 | 17 | 100 | -34 | 199 | NDC12PET | 58 | 60 | 3.0 | 80 |

[Table 2]

| | Laminate structure (I) | | Thickness control layer (II) | Heat shrinkage | | Maximum reflection wavelength nm | Maximum reflectance % | Designability | Haze % | Shrink film properties | | |
|---|---|---|---|---|---|---|---|---|---|---|---|---|
| | First layer thickness μm | Second layer thickness μm | Layer thickness μm | Longitudinal direction % | Transverse direction % | | | | | Adhesion | Shrinkage nonuniformity | Designability |
| Ex. 1 | 0.07 | 0.08 | 22.3 | 8 | 37 | 643 | 82 | o | 0.42 | o | o | A |
| Ex. 2 | 0.08 | 0.06 | 23.0 | 6 | 40 | 650 | 88 | o | 0.53 | o | o | A |
| Ex. 3 | 0.08 | 0.05 | 23.5 | 2 | 45 | 633 | 87 | o | 0.30 | o | o | A |
| Ex. 4 | 0.08 | 0.05 | 23.5 | 3 | 46 | 639 | 81 | o | 0.70 | o | o | A |
| Ex. 5 | 0.08 | 0.06 | 23.0 | 6 | 44 | 637 | 86 | o | 0.60 | o | o | A |
| Ex. 6 | 0.08 | 0.06 | 23.0 | 7 | 42 | 649 | 85 | o | 7.2 | o | o | A |
| Ex. 7 | 0.08 | 0.06 | 23.0 | 7 | 43 | 645 | 86 | o | 15 | o | o | B |
| Comp. 1 | 0.07 | 0.10 | 21.2 | 20 | 32 | 660 | 86 | o | 0.50 | o | x | A |
| Comp. 2 | - | - | - | - | - | - | - | - | - | - | - | - |
| Comp. 3 | 0.07 | 0.08 | 22.3 | 3 | 6 | 656 | 83 | o | 0.55 | x | x | A |
| Comp. 4 | - | - | - | - | - | - | - | - | - | - | - | - |
| Comp. 5 | 0.67 | 1.0 | 21.0 | 4 | 55 | None (infrared) | - | x | 0.45 | o | o | C |
| Comp. 6 | 0.50 | 0.08 | Not formed | 3 | 60 | None (infrared) | - | x | 0.45 | o | o | C |
| Comp. 7 | 0.07 | 0.10 | 21.2 | 21 | 31 | 660 | 81 | o | 0.50 | o | x | A |

"-" A film could not be produced (measurement impossible).

Industrial Applicability

According to the present invention, there is provided the heat-shrinkable polyester film, which has a high transparency, a particular wavelength light reflectivity, and thus a high lustrous designability to be excellent in visibility of a pattern printed thereon, and further has an iridescent metallic luster and a heat shrinkability allowing its attachment on a container such as a PET bottle. The film can be suitably used for a shrink label on a PET bottle, and also for an electric wire coating requiring the heat shrinkability and designability.

## Claims

1. A heat-shrinkable polyester film comprising a laminate structure (I) and a thickness control layer (II), **characterized in that**

   the laminate structure (I) comprises alternately stacked first and second layers within a range of 25 to 1001 layers, the first layer comprises a polyester (A) composed mainly of ethylene terephthalate and has a thickness of 0.02 to 0.4 $\mu$m,

   the second layer comprises a polyester (B) composed mainly of ethylene-2,6-naphthalene dicarboxylate and has a thickness of 0.03 to 0.5 $\mu$m,

   the thickness control layer (II) is formed on both sides of the laminate structure (I) and comprises a polyester (C) composed mainly of ethylene terephthalate,

   the ratio of the total thickness of the first layers and the thickness control layers (II) to the entire thickness of the film is 86% to 96%,

   the film has at least one reflection peak with a reflectance of 30% or more within a wavelength range of 400 to 800 nm in a reflectance curve, and

   when the film is placed in a warm water at 80°C for 10 seconds, the heat shrinkage of the film is 30% or more in one direction of the longitudinal direction and the width direction, and at least 0% but less than 10% in absolute value in a direction perpendicular to the one direction.

2. A heat-shrinkable polyester film according to claim 1, wherein the film has a haze of 0.1% to 10%.

3. A heat-shrinkable polyester film according to claim 1 or 2, wherein the polyester (A) composed mainly of ethylene terephthalate has a glass-transition temperature ($Tg_1$) of higher than 70°C but at most 100°C.

4. A heat-shrinkable polyester film according to any of claims 1 to 3, wherein the difference between the glass-transition temperature ($Tg_1$) of the polyester (A) composed mainly of ethylene terephthalate and the glass-transition temperature ($Tg_2$) of the polyester (B) composed mainly of ethylene-2,6-naphthalene dicarboxylate satisfies the following inequality (1):

$$-55°C < (Tg_1 - Tg_2) < -20°C \qquad (1).$$

5. A heat-shrinkable polyester film according to any of claims 1 to 4, wherein the ratio of the total thickness of the thickness control layers (II) to the entire thickness of the film is 50% to 85%.

6. A heat-shrinkable polyester film according to any of claims 1 to 5, wherein at least one of the first layer, the second layer, and the thickness control layer (II) contains at least 0% but less than 0.1% by weight of a particle.

7. A shrink label comprising a heat-shrinkable polyester film according to any of claims 1 to 6.

## Patentansprüche

1. Wärmeschrumpfbare Polyesterfolie, umfassend eine Laminatstruktur (I) und eine Dickenregulierungsschicht (II), **dadurch gekennzeichnet, dass** die Laminatstruktur (I) alternierend übereinandergestapelte erste und zweite Schichten innerhalb eines Bereichs von 25 bis 1001 Schichten umfasst, die erste Schicht einen Polyester (A) umfasst, der hauptsächlich aus Ethylenterephthalat besteht und eine Dicke von 0,02 bis 0,4 $\mu$m aufweist,

   die zweite Schicht einen Polyester (B) umfasst, der hauptsächlich aus Ethylen-2,6-naphthalindicarboxylat besteht und eine Dicke von 0,03 bis 0,5 $\mu$m aufweist,

   die Dickenregulierungsschicht (II) auf beiden Seiten der Laminatstruktur (I) ausgebildet ist und einen Polyester (C) umfasst, der hauptsächlich aus Ethylenterephthalat besteht,

   das Verhältnis der Gesamtdicke der ersten Schichten und der Dickenregulierungsschichten (II) zur Gesamtdicke der Folie 86% bis 96% beträgt,

   die Folie mindestens einen Reflexionspeak mit einem Reflexionsgrad von 30% oder mehr in einem Wellenlängenbereich von 400 bis 800 nm in einer Reflexionsgradkurve aufweist und

   dann, wenn die Folie über einen Zeitraum von 10 Sekunden in warmes Wasser bei 80°C eingebracht wird, die Folie einen Wärmeschrumpf von 30% oder mehr in einer Richtung der Längsrichtung und der Breitenrichtung und mindestens 0%, aber weniger als 10% als Absolutwert in einer zu der einen Richtung senkrechten Richtung aufweist.

2. Wärmeschrumpfbare Polyesterfolie nach Anspruch 1, wobei die Folie eine Trübung von 0,1% bis 10% aufweist.

3. Wärmeschrumpfbare Polyesterfolie nach Anspruch 1 oder 2, wobei der Polyester (A), der hauptsächlich aus Ethylenterephthalat besteht, eine Glasübergangstemperatur ($Tg_1$) von mehr als 70°C, aber höchstens 100°C aufweist.

4. Wärmeschrumpfbare Polyesterfolie nach einem der Ansprüche 1 bis 3, wobei die Differenz zwischen der Glasübergangstemperatur ($Tg_1$) des Polyesters (A), der hauptsächlich aus Ethylenterephthalat besteht, und der Glasübergangstemperatur ($Tg_2$) des Polyesters (B), der hauptsächlich aus Ethylen-2,6-naphthalindicarboxylat besteht, die folgende Ungleichung (1) erfüllt:

$$-55°C<(Tg_1-Tg_2)<-20°C \quad (1).$$

5. Wärmeschrumpfbare Polyesterfolie nach einem der Ansprüche 1 bis 4, wobei das Verhältnis der Gesamtdicke der Dickenregulierungsschichten (II) zur Gesamtdicke der Folie 50% bis 85% beträgt.

6. Wärmeschrumpfbare Polyesterfolie nach einem der Ansprüche 1 bis 5, wobei die erste Schicht, die zweite Schicht und/oder die Dickenregulierungsschicht (II) mindestens 0%, aber weniger als 0,1 Gew.-% eines Partikels enthalten bzw. enthält.

7. Schrumpfetikett, umfassend eine wärmeschrumpfbare Polyesterfolie gemäß einem der Ansprüche 1 bis 6.

## Revendications

1. Film de polyester thermorétractable comprenant une structure stratifiée (I) et une couche de contrôle d'épaisseur (II), **caractérisé en ce que**
   la structure stratifiée (I) comprend des premières et deuxièmes couches superposées en alternance dans une plage de 25 à 1 001 couches,
   la première couche comprend un polyester (A) constitué essentiellement de téréphtalate d'éthylène et a une épaisseur de 0,02 $\mu$m à 0,4 $\mu$m,
   la deuxième couche comprend un polyester (B) constitué essentiellement de dicarboxylate d'éthylène-2,6-naphtalène et a une épaisseur de 0,03 $\mu$m à 0,5 $\mu$m,
   la couche de contrôle d'épaisseur (II) est formée sur les deux côtés de la structure stratifiée (I) et comprend un polyester (C) constitué essentiellement de téréphtalate d'éthylène,
   le rapport de l'épaisseur totale des premières couches et des couches de contrôle d'épaisseur (II) contre l'épaisseur entière du film est de 86 % à 96 %,
   le film comporte au moins un pic de réflexion ayant une réflectance de 30 % ou plus dans une plage de longueurs d'onde de 400 nm à 800 nm dans une courbe de réflectance, et
   quand le film est placé dans de l'eau chaude à 80 °C pendant 10 secondes, la thermorétraction du film est de 30 % ou plus dans une direction de la direction longitudinale et de la direction transversale, et d'au moins 0 % mais de moins de 10 % en valeur absolue dans une direction perpendiculaire à ladite une direction.

2. Film de polyester thermorétractable selon la revendication 1, le film ayant un trouble de 0,1 % à 10 %.

3. Film de polyester thermorétractable selon la revendication 1 ou 2, dans lequel le polyester (A) constitué essentiellement de téréphtalate d'éthylène a une température de transition vitreuse ($Tg_1$) supérieure à 70 °C mais ne dépassant pas 100°C.

4. Film de polyester thermorétractable selon l'une quelconque des revendications 1 à 3, dans lequel la différence entre la température de transition vitreuse ($Tg_1$) du polyester (A) constitué essentiellement de téréphtalate d'éthylène et la température de transition vitreuse ($Tg_2$) du polyester (B) constitué essentiellement de dicarboxylate d'éthylène-2,6-naphtalène satisfait à l'inégalité suivante (1) :

$$-55\ °C < (Tg_1 - Tg_2) < -20\ °C \qquad (1).$$

//

5. Film de polyester thermorétractable selon l'une quelconque des revendications 1 à 4, dans lequel le rapport de l'épaisseur totale des couches de contrôle d'épaisseur (II) contre l'épaisseur entière du film est de 50 % à 85 %.

6. Film de polyester thermorétractable selon l'une quelconque des revendications 1 à 5, dans lequel au moins une de la première couche, de la deuxième couche, et de la couche de contrôle d'épaisseur (II) contient au moins 0 % mais moins de 0,1 % en poids d'une particule.

7. Étiquette rétractable comprenant un film de polyester thermorétractable selon l'une quelconque des revendications 1 à 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9174684 A
- JP 2007152943 A
- JP 9506837 T
- JP 2002160339 A